# EUROPEAN PATENT SPECIFICATION

(11) **EP 3 355 318 B1**
(45) Date of publication and mention of the grant of the patent: **23.06.2021**
(21) Application number: 17153982.8
(22) Date of filing: 31.01.2017
(51) Int. Cl.: H01B 17/26, H02G 15/06, H01R 13/533

(54) **HIGH-POWER BUSHING FOR HARSH ENVIRONMENTS**
HOCHLEISTUNGSDURCHFÜHRUNG FÜR RAUE UMGEBUNGEN
TRAVERSÉE HAUTE PUISSANCE POUR ENVIRONNEMENT HOSTILE

(43) Date of publication of application: 01.08.2018
(73) Proprietor: Tyco Electronics Raychem GmbH, 85521 Ottobrunn (DE); TYCO ELECTRONICS (UK) LTD, Swindon, Wiltshire SN3 5HH (GB)
(72) Inventor: SIMONSOHN, Thilo, 81735 München (DE); FRIEDRICH, Torsten, 82152 Planegg, OT Martinsried (DE); HOFMANN, Martin, 85617 Assling (DE); MORTIMER, Laurence, Brockworth, Gloucestershire GL34RN (GB)
(74) Representative: Grünecker Patent- und Rechtsanwälte PartG mbB

(56) References cited:
- JP-A- H07 107 608
- JP-A- H07 272 568
- JP-A- S59 191 215
- JP-A- S63 298 924

## Description

Generally, the present invention relates to contact technology and in particular to bushings for providing a connection between an external cable carrying relatively high power, for instance in the range of several tens of kilowatts to several hundreds of kilowatts and higher, and a housing-internal conductor for further processing of the supplied power.

In many technical fields electrical power has to be supplied by or to certain components, such as sophisticated switches, transformers, motors, and the like, which may frequently be positioned, at least partially, in an appropriate housing. On the other hand, outside the housing the required electrical power may be supplied by or to one or more appropriately dimensioned cables connected to a respective power supply or electric component, wherein the electrical power may be provided as AC or DC or both. Depending on the application under consideration the respective electrical power may range from several tens of kilowatts to several hundred of kilowatts and even higher, thereby requiring respective cable configurations in terms of cross-section and insulation characteristics. For example, high electrical power may frequently be provided in the context of medium voltages to high voltages, ranging from several hundred volts to several ten thousand volts, thereby resulting in relatively low currents to be conveyed in the external cables, while in other applications, relatively low voltages may be used, for instance in mobile DC applications, such as electric vehicles, thereby imposing superior requirements with respect on the drive current capability of the respective cables. In any case, the corresponding external cables may require an appropriate configuration with respect to conductor material, conductor cross-section, insulating sheath, and the like, thereby typically resulting in a cable configuration including one or more copper-based or aluminium-based core wires with a cross-section of several centimetres surrounded by an appropriate insulation or cover material that provides for the required insulating behaviour and integrity of the entire cable. Since these cables may frequently be exposed to relatively harsh environments, for instance such cables may be exposed to outside conditions including exposure to direct sunlight, extreme temperatures ranging from -50°C to 70°C, and the like, thereby necessitating the usage of appropriate sheath materials, which may therefore also contribute, in addition to the core material, to additional weight of the respective cables.

On the other hand, typically respective power receiving components or power supplying components, such as switches, transformers, motors, and the like are often encapsulated in an appropriate housing so as to provide for superior integrity of such components or at least of any contact structures thereof. Due to the protected interior of the housing any requirements for housing-internal conductors may be significantly less stringent, thereby even allowing the usage of such housing-internal conductors without external insulating material, and the like. One critical interface of a housing-internal conductor and an external cable represents a respective bushing, which is to be understood as a component that is appropriately mounted to the housing and provides a passage for the exchange of electrical power between the external cable and the housing. To this end, a corresponding bushing typically comprises a highly conductive metal conductor, typically in the form of a copper bolt, which is surrounded by an insulating material that is formed from an appropriate material, such as epoxy resin. Epoxy resin is known to exhibit high mechanical strength and stiffness and superior insulating characteristics. In order to provide a mechanically and electrically stable bushing the metal core and the epoxy resin are typically formed into an integral component by, for instance, injection molding, thereby obtaining a robust and stiff product. Consequently, by providing an appropriate mounting flange at any appropriate position the bushing may be inserted into a corresponding bore provided in the housing and may be fixed thereto by the mounting flange, thereby providing for high mechanical and electrical integrity of the resulting connection between an external cable attached to the bushing at one end thereof and a housing-internal conductor connected to the bushing at the other end thereof.

These well established high-power bushings, however, may suffer from increased failure events when used in applications associated with sophisticated external conditions. For example, the robust and stiff configuration of the conventional high-power bushing may exhibit an increasing number of device failures upon being exposed to relatively extreme temperatures, for instance ranging from approximately -40°C to approximately 70°C, as are typically encountered under various environmental conditions in various geographic locations. For instance, power supply in many types of vehicles, such as trains, may result in exposure to harsh conditions, such as the above-referenced temperatures, for instance upon direct exposure to sunlight, while in cold winter days extremely low temperatures may occur. Such extreme temperatures may by itself represent a significant stress for the bushing, as typically epoxy resin and the usually highly conductive copper material may have very different coefficients of thermal expansion, which may result in cracks or any other damage in the insulating epoxy resin, in particular, when certain mechanical forces may additionally act on certain bushing components.

As an example, the external cable, which may have a relatively high weight, is typically connected to the bushing so that an end face of the copper bolt of the bushing is in firm contact with a respective end face of the external cable or a contact assembly connected thereto, which may result in a more or less pronounced bending force exerted on the copper bolt of the bushing. Under extreme temperature conditions, as discussed above, however, these relatively high bending forces may promote the creation of damage in the insulating material, since the difference in the thermal expansion in combination with the additional mechanical forces acting the copper bolt and hence on the epoxy resin may finally result in a breakage of the external sheath, thereby also typically resulting in a failure of the entire high-power connection. Similarly, at moderately high temperatures the mechanical properties of the epoxy resin may also be subjected to degradation, thereby also increasing the probability of resulting in a severe device failure.

The situation described above may even become worse in circumstances, in which the respective forces acting on certain components of the bushing may vary timely and spatially, for instance, when externally or internally induced vibrations are present. The source of such vibrations may be, for instance, in mobile applications the movement along respective railroad rails, wherein the joints between adjacent rails may cause significant vibrations in a more or less regular manner, depending on the overall speed of the respective electric vehicle and the distance of the joints. Similar vibrations, however, with reduced regularity, may be encountered in street-bound vehicles, wherein speed and surface conditions of a respective road may significantly determine the resulting "spectrum" of vibrations acting on the corresponding bushing components.

Moreover, in train applications or similar use cases, sophisticated contactors or switching devices may have to be used, in which moderately high masses are accelerated and moved during a corresponding switching process, thereby typically involving a direct impact of the corresponding contact components and introducing respective mechanical shocks and vibrations into the bushing components. Although rare events of such induced mechanical loads may not necessarily significantly affect the bushing and the electrical and insulating state of the various components, it turns out, however, that over an extended lifetime, which is typically required in many applications, such as 10 to 15 years, the conventional robust and stiff configuration, for instance obtained on the basis of an integrally moulded epoxy resin and copper bolt component may result in a significant reliability issue, thereby rendering the conventional configuration less than desirable for a high-power bushing to be used in sophisticated environmental conditions.

JP H07 272568 A relates to a capacitor bushing having a cushion material of a thermally contracting elastic tube which is wrapped on the outer circumference of a center conductor. An insulating layer of a paper sheet to which a conductive layer of aluminum is coiled on the outer circumference of the cushion material to form a core. The core is wrapped by a resin insulator with which both layers are impregnated. The insulator is contracted at the time of heating and hardening. At that time, the inner stress of the insulator is absorbed by the cushion material and crack formation in the insulator is prevented.

JP S63 298924 A discloses a resin mold bushing with improved anti-cracking property and airtightness-resisting property by furnishing the first layer consisting of a silicon rubber type adhesive on a central conductor and the second layer consisting of a heat-contracting material over the first layer, and heating. The first layer of a silicon rubber type adhesive tape furnished close to a central conductor keeps the condition of a putty with no flowing-out even under a high temperature at 150 °C or more, and does hot lose the rubber elasticity even under a low temperature ambiance at -50 °C. As a result, a stress generated by the difference of the thermal expansion rate between the central conductor and a pouring pattern layer in a rapid heating and a rapid cooling can be relaxed sufficiently. Moreover, the first layer contacts closely to the central conductor and to the second layer by the thermal contraction of the second layer owing to its thermal contraction tape, maintaining the airtightness perfectly. Since the second layer with the thermal contraction tape contacts rigidly to the whole body of the pouring pattern resin layer by the chromic acid mixture solution treatment, the airtightness-resisting property is improved, and the anti-cracking property is secured generating no stress concentration on the pouring pattern resin layer.

JP S59 191215 A discloses a high-frequency high-current bushing, and more particularly a high-frequency high-current bushing. A bushing is provided through the inside and outside of a tank in order to supply electricity to a semiconductor element in the sealed tank. The bushing comprises a central conductor made of a steel material, and an insulator penetrating the center conductor and electrically insulating the tank at a ground potential. A metal ring is used for mounting. According to this document, the bushing penetrates the tank of the semiconductor cooling device, and its configuration is almost the same as the conventional configuration, except for the ring being formed from a non-magnetic material, in order to avoid generation of noise.

JP H07 107608 A discloses a low noise current collector excellent in controllability and response being employed suitably in high speed rolling stock and an insulator therefor. The current collector comprises a current collecting body holding a slider for collecting current from a stringing, a supporting insulator therefor, a flexible conductor for conducting power, and a cable head for connecting a flexible cable. An actuator and the current collecting body are regulated vertically along with the supporting insulator so that the contacting force between the stringing and the slider has a correct value. A light polymer resin insulator is employed as the supporting insulator and a ceramic insulator having high insulation reliability is employed as the cable head. A hollow supporting insulator filled with an insulating foamed material is employed in order to realize both light weight and high insulation reliability. Furthermore, the central axis of an insulator rod is set in front of the central axis of umbrella in the advancing direction of vehicle in order to compensate for the dielectric deterioration due to the atmospheric pressure drop on the back of the insulator during high speed travel thus enhancing the insulation reliability.

It is therefore an object of the present invention to provide a bushing, in particular a high-power bushing, which is significantly less responsive to sophisticated environmental conditions, in particular with respect to mechanical forces, especially shocks and vibrations and/or extreme temperatures over an extended lifetime.

This object is solved by the subject-matter of independent claim 1. Advantageous embodiments are the subject-matter of the dependent claims.

The object pointed out above is addressed by a bushing, which, for instance, may be used for connecting a cable with a housing interior. The bushing comprises an elongated insulating body including a first body end portion, a second body and portion and a body centre portion connecting the first and second body and portions. The bushing further comprises an elongated bushing conductor that axially extends within and is mechanically coupled to the insulating body. The bushing conductor (which is also referred to as "bolt" in the following) comprises a first connecting portion having a first end face located at the first body end portion. The bushing conductor further comprises a second connecting portion having a second end face located at the second body end portion. Finally, the bushing conductor comprises a centre portion electrically and mechanically connecting the first and second connecting portions. The first connecting portion is elastically deformable with respect to the first body end portion and/or the second connecting portion is elastically deformable with respect to the second body end portion.

The inventive bushing comprises, among others, at least one connecting portion, e.g., the first connecting portion, the second connecting portion or both, that is elastically deformable with respect to its respective or corresponding body end portion along at least one radial direction in a state, in which the first end face of the first end portion and/or the second end face of the second body end portion are connected to a terminal portion of a counterpart conductor, such as a housing-external cable or cable contact regime and/or a housing-internal contact regime, when the bushing provides electrical connection. As a consequence, the first connecting portion and/or the second connecting portion of the bushing conductor may elastically be displaced and thus deformed with respect to the surrounding part of the insulating body. That is, upon responding to a mechanical force acting on the respective connecting portion of the bushing conductor the respective part of the insulating body may remain substantially unaffected by the respective mechanical force and thus of a corresponding elastic deformation of the associated part of the bushing conductor, thereby avoiding or at least significantly reducing the risk of damage of the insulating body, even when considering relatively long time intervals during which respective mechanical forces may act on the bushing. Thus, according to the principles of the present invention it has been recognized that a significant increase in reliability of bushings, such as high-power bushings, may be obtained by using the concept of mechanical decoupling of a part of the bushing conductor from part of the insulating body by enabling the bushing conductor to respond to mechanical forces, such as static and/or dynamic loads, by an appropriate elastic deformation without or with only reduced influence on the surrounding part of the insulating body. For example, as discussed above, even at extreme temperature conditions a respective degradation of mechanical characteristics of typical insulating materials used in an insulating body may therefore being prevented from significantly affecting the overall functional behaviour of the bushing. This is achieved by substantially avoiding or at least reducing the mechanical contact between the elastically deformed part of the bushing conductor and the respective surrounding part of the insulating body. Even for respective vibrations, for instance caused by frequent occurrence of a mechanical impact of significant contactor masses, the highly mechanically decoupled configuration of the relevant parts of the bushing conductor and the insulating body may enhance overall reliability of the bushing and thus reduce the probability of deforming/breaking the respective part of the insulating body.

According to the invention, the elastic displacement or deformation capability is obtained by a tapered clearance that is provided between the respective connecting portion of the bushing conductor and the respective body end portion of the insulating body. Consequently, a substantial mechanical decoupling of respective parts of the bushing conductor and the insulating body is accomplished by providing a respective gap or clearance, thereby avoiding or reducing mechanical contact between these two parts when deforming the end portion of the bushing conductor due to radial forces. The clearance may be formed so as to substantially entirely surround at least the connecting portion of the bushing conductor, while in other cases, the clearance may include one or more areas without any material provided therein, while other areas may be filled with an appropriate material.

In one illustrative embodiment the clearance is filled partially with an elastic fill material or a compressible material, wherein the elastic characteristics of the fill material may provide for the desired reduced mechanical coupling between the relevant portions of the bushing conductor and the insulating body while nevertheless providing for superior integrity of the clearance. That is, with respect to a prolonged lifetime of the bushing it may be considered advantageous to suppress the incorporation of undesired substances, such as humidity, foreign particles, and the like, into the clearance, which may otherwise reduce the elastic responsiveness of the connecting portion of the bushing conductor. By providing a respective elastic fill material, on the other hand, the degree of mechanical decoupling may be adjusted on the basis of the type and amount of the material provided in the clearance, while at the same time achieving a high degree of stability of the respective elastic characteristics by, for instance, reducing the probability of incorporating undesired substances. For example, materials such as silicone rubber, i.e., in the form of a silicone gel or foam, and the like may effectively be used as elastic fill material, which may therefore provide the elastic characteristics over a wide range of temperatures and other sophisticated environmental conditions. As already discussed above, the clearance is not filled entirely with the elastic fill material, depending on the overall configuration and requirements.

In one advantageous embodiment the clearance has a width in the range of up to 5 mm or up to 5% of the length of the first and/or second connecting portions of the bushing conductor. That is, the tapered clearance within a single device may vary in the above-identified range, thereby providing for a respective transition in mechanical responsiveness, i.e., in the capability of allowing a respective elastic deformation of a corresponding portion. In other cases, the above-referenced range may refer to a plurality of different bushings, wherein each type of bushing may be provided with a respective width so as to be appropriately adapted to specific conditions. For example, depending on the geometry and the material characteristics of the bushing conductor and depending on the mechanical forces, such as vibrations, and the like that are expected to act on the bushing conductor the representative width of the clearance may be appropriately selected from 0.1 mm to more than 1.0 mm. To this end, experiments and/or simulations may be carried out in order to estimate an appropriate representative width of the clearance for a respective application. It should be appreciated that a representative width of the clearance is to be understood as a width that represents a characteristic measure for defining a radial size of the clearance. For example, the radial dimension or width dimension of the clearing may vary due to manufacturing tolerances and/or within tolerances caused by a certain "non-elastic" component that may occur during the lifetime of the bushing, thereby possibly resulting in a reduced width along one or more directions and an increased width along other directions, in which a respective mechanical deformation may have been occurred less frequently than in the other directions. In this case, the representative width may be given by the width averaged along the length dimension of the clearance. Moreover, according to the invention, the clearance tapers along its length dimension with the tapering beginning at a specific length position. In this case, the maximum width may be used as the representative width for defining the radial measure of the clearance.

In a further advantageous embodiment a form closure is provided between a part of the elongated bushing conductor and a part of the elongated insulating body. Consequently, according to this embodiment a tight mechanical contact is present along a specified part of the bushing along its length direction, thereby providing for a mechanically robust and rigid configuration at certain parts of the bushing, however, without affecting the elastic deformation capability of at least the first connecting portion of the bushing conductor with respect to the surrounding part of the insulating body. For example, in the region of the form closure between the insulating body and the bushing conductor respective external forces, for instance for mounting the bushing to any other component, may efficiently be applied to the bushing in its entirety, since the respective radial forces may be transferred from the insulating body into the bushing conductor due to the tight mechanical contact of these components. The connection of the bushing conductor as form closure may be achieved by force-fit, form-fit or material fit (i.e. soldering) or mechanical elements like screws or combinations thereof.

In one advantageous embodiment the first and/or second connecting portions are elastically deformable along any radial direction. That is, in this embodiment radial forces along any radial direction may be accommodated by the end portion of the bushing conductor, thereby achieving a high degree of flexibility in using the bushing, irrespective of respective radial orientation and/or directionality of the forces acting on the bushing. For example, although respective bending forces exerted by heavy cables or a contact assembly connected to the end face of the connecting portion may typically preferably act in the direction of gravity, the directional diversity of this embodiment may allow an arbitrary installation of the bushing with respect to radial orientation, since any direction may provide for the elastic deformation capability. Moreover, when vibrational effects may dominate in the occurrence of respective radial forces it may not be clear in advance whether there is a dominating direction of these oscillations or whether these oscillations may occur along a significant range of radial directions. Also in this case a significant mechanical decoupling between the relevant portions of the bushing conductor and the insulating body may be guaranteed as the decoupling effect is substantially independent of the radial direction.

In a further option both the first and the second connecting portions are elastically deformable with respect to the respective body end portions along at least one radial direction, thereby providing for superior responsiveness of the bushing with respect to mechanical loads as both ends thereof may resiliently respond to static and/or dynamic loads.

In a further illustrative embodiment the at least one radial direction is determined by a nonradial-symmetric geometric configuration of a cross-section of the first connecting portion and/or the second connecting portion and/or a part of the centre portion of the bushing conductor. Consequently, according to this embodiment the geometry of the bushing conductor, i.e. of relevant portions thereof, may be selected so as to obtain one or more preferred radial directions, along which a desired elastic deformation of the bushing conductor may be achieved. For example, at least in a certain portion a non-circular cross-section of the bushing conductor may result in different elastic characteristics in different radial directions, thereby enabling a specific adaptation of the mechanical responsiveness of the bushing conductor to specific applications. For example, if one radial direction has been identified as a major direction that requires elastic deformation capability for responding to respective radial forces, while other directions may require superior stiffness, the cross-sectional configuration may specifically adapted, for instance by providing an overall geometry, and the like, so as to accommodate the above-specified conditions. Furthermore, such a non-radial symmetric cross section may differ over the length of the conductor bolt. As most of the mechanical load occurs in the center of the bushing where the clamping is located, it is advantageous to have in this area the more robust non-radial symmetric shape. In principle, the shape may then vary over the length of the bolt and may turn into a rotation symmetric shape at least close to the connecting ends of the bushing.

In a further illustrative embodiment a length of the first and/or the second connecting portions that is elastically deformable with respect to the corresponding body end portions is in the range of 15 mm to 300 mm. Consequently, a "functional length" of the displaceable or deformable behaviour of the bushing conductor with respect to the insulating body may be adjusted within the above-referenced range so as to appropriately comply with the respective applications. It should be appreciated that the above-identified range of the "functional length" is appropriate for many high power applications, in which an external cable of several centimetres in diameter may have to be connected to the end face of the first connecting portion in order to transfer electrical power in the range of 100 kW and higher. It should be appreciated, however, that in other illustrative embodiments the above-referenced range of the "functional length" may be adapted to other applications, for instance by using a functional length of less than 15 mm or a functional length of greater than 30 mm, if considered appropriate under certain circumstances.

In one preferred embodiment the insulating body comprises a shielding sheath that is provided as an inner surface of the insulating body. Thus, according to this embodiment in particular the electric characteristics of the insulating body may be enhanced by providing the shielding sheath, which may typically be formed of an appropriate material that imparts the shielding effect to the sheath. For instance, the sheath may be implemented in the form of a conductive coating at the inner surface of the insulating body, or the material of the sheath may be provided as a separate sheet attached to the inner surface. In other cases the sheath may be formed by machining a slit into the bushing conductor, which may have been initially firmly attached to the insulating body.

In one illustrative embodiment the shielding sheath comprises a metal that differs from a metal of the bushing conductor. That is, by providing a metal-containing sheath or metal sheath as inner surface of the insulating body superior electric integrity of the insulating body may be achieved. It should be appreciated that the term "insulating body" as used herein refers to any configuration, in which in total electrical insulation is obtained between the bushing conductor and the exterior of the bushing. That is, according to the present invention the insulating body may still comprise any electrically conductive areas as long as the outer surface of the insulating body does not form a conductive path to the bushing conductor. Consequently, although the shielding sheath, when formed from a metal, may impart conductive characteristics to the insulating body at its inner surface along a length direction, the insulating characteristics of the insulating body with respect to its outer surface, i.e., along the radial direction are still maintained.

In some illustrative embodiments the shielding sheath, for instance comprised of a metal, may be selected so as to have similar characteristics with respect to thermal expansion compared to the remaining insulating material of the insulating body. In one illustrative embodiment the shielding sheath may be formed from aluminium or may at least comprise a significant amount of aluminium, which may have a very similar coefficient of thermal expansion compared to many types of epoxy resin, thereby obtaining a similar response to temperatures while still providing for superior mechanical characteristics of the overall insulating body. Moreover, upon providing a metal sheath or a metal-containing sheath, such as an aluminium sheath at the inner surface of the insulating body, superior contact characteristics between the bushing conductor and the insulating body are achieved at areas, in which these two components are in direct mechanical contact. When using an aluminium sheath the layer thickness thereof may be selected relatively thin so that the total mechanical and thermal behavior is substantially determined by the epoxy resin compared to providing a relatively thick aluminum sheath. In a further option the shielding sheath may be provided as a coating of the inner surface of the insulating body by using polymeric or metallic coating materials.

In a further illustrative embodiment the bushing comprises a mounting flange that is provided at the centre portion for fixing the bushing to the housing. As already discussed above, in typical applications a firm mechanical connection has to be established between the bushing and the housing, which may efficiently be accomplished on the basis of the mounting flange. Preferably, the mounting flange is provided at such a position of the bushing, at which the bushing conductor and the insulating body are in direct mechanical contact with each other. Consequently, according to this embodiment a respective mechanical force may be applied to the bushing as a whole, i.e. to the insulating body and the bushing conductor via the flange, thereby providing for superior mechanical robustness and stiffness of the connection between the housing and the bushing.

In a further illustrative embodiment the bushing conductor has an inner bore that extends through an entire length of the bushing conductor. By providing the inner bore along the entire length of the bushing conductor increased flexibility in connecting the bushing conductor to a housing-internal conductor may be achieved. For example, the inner bore may allow the insertion of any connection members, such as a screw, and the like together with a respective tool without requiring the provision of conventional connection means, such as a threaded portion. It should be appreciated that the provision of the inner bore of the bushing conductor may not adversely affect the overall conductivity of the bushing conductor, since the remaining cross-sectional area of the bushing conductor may still be selected so as to provide for a required low resistance of the connection. It should further be appreciated that in still other illustrative embodiments the bushing conductor may be provided in the form of solid matter, except for respective recesses at the first and/or second connection portions for establishing a mechanical connection with the external cable and the housing-internal conductor.

In a further illustrative embodiment the size of the first end face of the bushing conductor is less than a size of the second end face. That is, in this embodiment the cross-sectional area of the second end face, e.g., of the end face connecting to the housing-internal conductor, may be greater, thereby providing the possibility of generally reducing the overall resistance of the bushing, while the size and the shape of the end face of the first connection portion, e.g. the end face connecting to a housing-external cable or contact regime, may be selected in accordance with overall requirements. In particular, the size and shape of the first end face may comply with standards that are used in typical applications, for instance when connecting the power supply cable in a train to a respective housing accommodating a magnetic switch assembly, and the like. Hence, standard requirements may readily be complied with at the contact regime between the external cable and bushing, while high degree of flexibility is provided in adapting size and shape of the second end face within the housing.

In a further illustrative embodiment the bushing is configured to be used on an electrically driven vehicle for conveying electric power of 100 kW and higher, for instance for connecting a power supply cable to a contact mechanism of the electrically driven vehicle. That is, according to this embodiment the overall configuration of the bushing is appropriately adapted to transfer power in the above-specified range, irrespective of the voltage used for the power supply and irrespective of the type of current, i.e., AC or DC, wherein the elastic deformation capability of at least the first connection portion of the bushing conductor provides for superior reliability during a moderately long lifetime. In some illustrative embodiments, the bushing is adapted for power supply in trains requiring medium to high voltage compliance so that the housing-external cable or contact assembly as well as for instance the insulating body of the bushing are appropriately adapted so as to accommodate the medium voltage and high voltage requirements typically encountered in train applications. In particular the inventive bushing may provide for superior reliability in train applications, since the strong mechanical influence of the typically used magnetic contactor assemblies, which may result in significant mechanical shocks and vibrations due to the collision of heavy contacts in the magnetic contactor assembly, may be "neutralised" to a high degree by the elastic or compliant behaviour of the relevant portion of the bushing conductor. Similarly, in other present or future applications significant electrical power may have to be supplied into specific locations of an electrically driven vehicle, such as vans, cars, and the like, wherein also significant mechanical stress may be involved due to specific vibrations caused internally or externally of the electric vehicle. It should be appreciated that in many presently available electric vehicles designed for road traffic or rail-bound traffic DC voltage may typically have to be supplied to respective components, such as motors, batteries, and the like. Also in this case the superior mechanical behaviour of the inventive bushing may provide for enhanced reliability. In particular in DC high power applications superior reliability of the insulating characteristics of a corresponding bushing may be of increased importance due to the non-self-extinguishing behaviour of respective arcs that may occur upon opening/closing respective circuits.

Other illustrative embodiments are also referred to in the dependent claims and are described in the following detailed description, in which reference is made to the accompanying drawings, in which:
Figure 1 schematically illustrates a perspective view of a bushing according to one illustrative embodiment of the present invention;
Figure 2 schematically illustrates a side view of the bushing of figure 1;
Figure 3 schematically illustrates a cross-sectional side view of the bushing of Figures 1 and 2 when mounted to a housing and connected to an external cable;
Figure 4 schematically illustrates a part of the bushing of Figure 3 in an enlarged view; and
Figures 5a and 5b schematically illustrate cross-sectional views perpendicular to a longitudinal direction of the bushing in accordance with illustrative embodiments of the present invention.

With reference to the accompanying drawings further illustrative embodiments of the present invention will now be described in more detail.

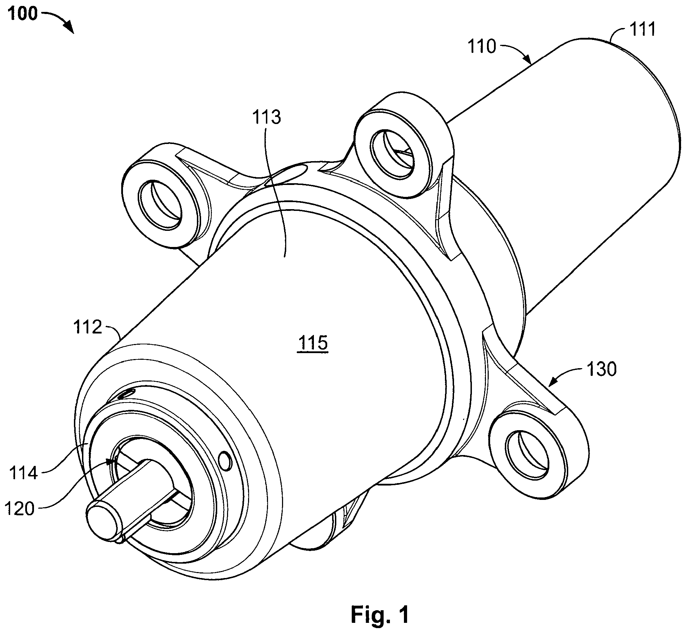

Figure 1 schematically illustrates a perspective view of a bushing 100, which in some illustrative embodiments represents a connecting member for providing a passage in a wall of a housing so as to enable the exchange of high electrical power between the outside of the respective housing and its interior. In this context high electrical power is to be understood as electrical power ranging from several tens of kilowatts, and in particular embodiments of hundred kilowatt, to several hundreds of kilowatts and even higher, wherein the high electrical power may be associated with a voltage in the range of several hundred volts to several kilowatt or even several tens of kilovolt, while the respective current may be determined by the corresponding supply voltage. Similarly, the electrical power may be supplied in the form of AC power or DC power, depending on the specific application under consideration. The bushing 100 comprises an elongated insulating body 110, which surrounds a bushing conductor 120 and which may be formed of any appropriate material, such as copper, copper alloys, aluminium, and the like. In one particular embodiment, the elongated bushing conductor 120 is provided in the form of a copper conductor having an appropriate shape, as will be discussed in more detail later on.

The insulating body 110 may functionally be divided into a first body end portion 111, a second body end portion 112 and a body centre portion 113 that may be considered as an intermediate part connecting the first body end portion 111 and the second body end portion 112. It should be appreciated that the various portions are to be understood as functional portions with any appropriate dimensions, wherein the first body end portion 111 may represent a part of the bushing 100 that is basically configured to connect to a contact assembly for an external cable, while the second body end portion 112 is basically configured so as to protrude into a respective housing and connect to a housing-internal conductor, which in turn may connect to any component accommodated in the housing, such as a switch assembly, a transformer terminal, and the like. Similarly, the functional body centre portion 113 may represent a portion that is basically in contact with the housing so as to provide for an appropriate mechanical contact with the housing.

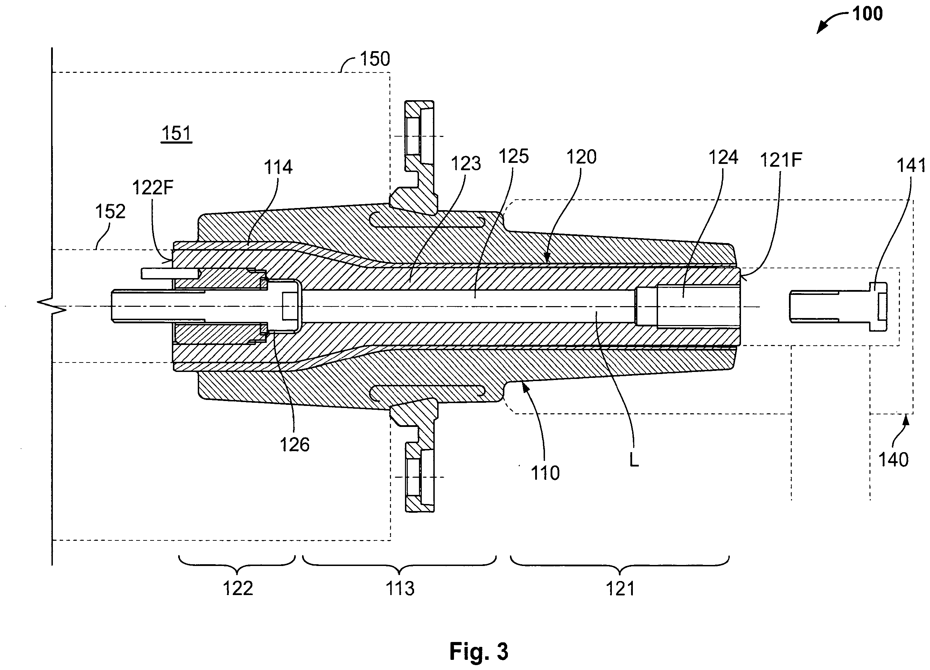

As already discussed above, the insulating body 110 may be formed of any appropriate material or material composition so as to provide for electrical insulation on an outer surface thereof, at least along the major part of the insulating body 110. In the embodiment shown in Figure 1 the insulating body 110 may further comprise a conductive component, such as a metal sheath 114, which may therefore form an inner surface of the insulating body 110, as will be discussed in more detail with reference to Figure 3. Moreover, in this specific embodiment the conductive sheath, which is also referred to as a shielding sheath 114 may be exposed along a certain length along a longitudinal direction of the insulating body 110 at the second body end portion 112. For example, the sheath 114 may be in tight contact with the bushing conductor 120 at the second body end portion 112 and/or parts of the body centre portion 113, thereby providing for a mechanically robust and stiff configuration of the insulating body 110 and the bushing conductor 120 in the area of the second body end portion 112 and, at least partially, in the body centre portion 113, as will also be discussed later on in more detail. In one illustrative embodiment the shielding sheath 114 may be made of aluminium, thereby providing similar characteristics with respect to thermal expansion compared to an insulating material 115 of the insulating body 110, when, for instance, epoxy resin is used for the material 115 of the insulating body 110. A thickness of the shielding sheath 114 may range from approximately 0.05 mm to 5 mm or higher, depending on the overall configuration. It should further be appreciated that the thickness of the shielding sheath 114 may vary along the length direction of the bushing 100, if considered appropriate for the overall configuration. In other embodiments the shielding sheath 114 may be provided in the form of coating whose thickness may be 0.5 mm and less.

It should also be appreciated that the bushing conductor 120 may also be functionally divided into a first connecting portion substantially corresponding to the first body end portion of the body 110, a second connecting portion substantially corresponding to the second body end portion 112 and a centre portion representing an intermediate portion between the first and second connecting portions, as will be discussed in more detail with reference to Figure 3.

Moreover, in the embodiment illustrated in Figure 1 the bushing 100 further comprises a mounting flange 130, which is positioned at the body centre portion 113 of the insulating body 110 and which is appropriately configured so as to be mounted to a respective housing, thereby allowing a firm mechanical connection of the bushing 100 to the corresponding housing.

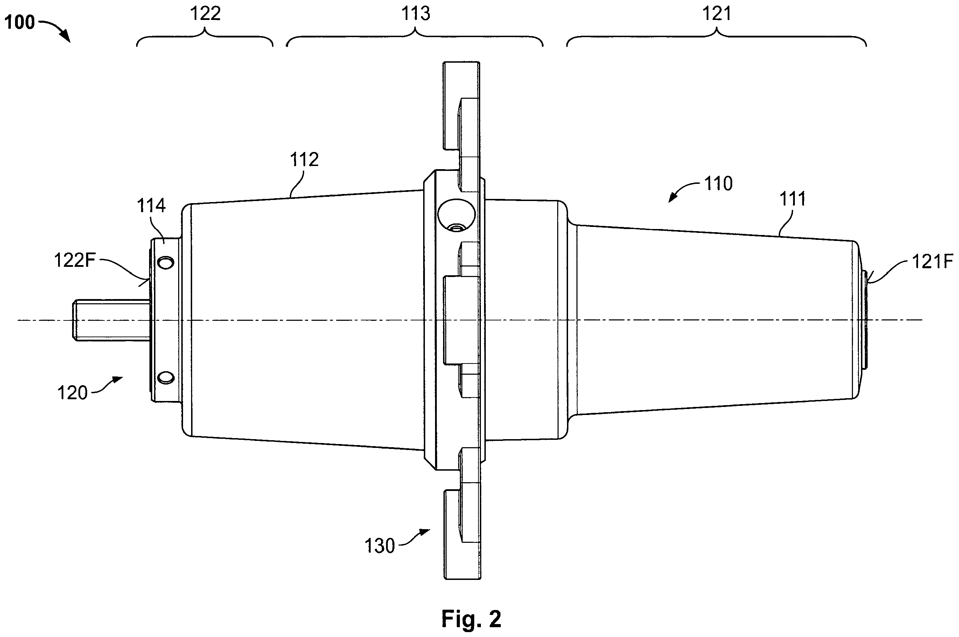

Figure 2 schematically illustrates a side view of the bushing 100 including the insulating body 110, the bushing conductor 120 and the mounting flange 130. As illustrated, the bushing conductor 120 includes a first end face 121F, which is exposed by the first body end portion 111 so as to allow mechanical and thus electrical contact to a respective terminal or end face of a contact assembly connecting to external cable or a corresponding connecting portion thereof, as will be explained with reference to Figure 3. Similarly, the bushing conductor 120 comprises an exposed end face 122F, which may allow mechanical and thus electrical contact to a respective housing-internal conductor, as will also be discussed in more detail with reference to Figure 3. In the embodiment illustrated in Figure 2 the size and/or shape of the end face 121F may differ from the size and/or shape of the end face 122F so that these different portions of the bushing 120 may specifically be adapted to the respective requirements within the corresponding housing and outside of the housing. For example, frequently respective high power cables and their contact assemblies are provided in accordance with standardised dimensions and shapes and therefore the first end face 121F may specifically be adapted to such standardised requirements, thereby allowing connection to standard cables and/or contact assemblies. On the other hand, the second end face 122F may be appropriately selected so as to provide for reduced overall resistance and high mechanical robustness and allow connection to application-specific housing-internal conductors. For example, as illustrated in Figure 2, in illustrative embodiments a cross-sectional size of the end face 122F may be greater than the cross-sectional size of the end face 121F.

Figure 3 schematically illustrates a cross-sectional view of the bushing 100 according to illustrative embodiments. As shown, the bushing 100 may be mounted to a housing 150, which may have any appropriate size and shape as determined by the specific application under consideration. For example, the housing 150 may typically represent a metal housing that accommodates specific electrical components, for instance as a switch assembly, such as a magnetic contactor, a transformer or at least a portion thereof, an electric motor or a contact portion thereof, and the like. In particular, the bushing 100 protrudes into the interior 151 of the housing 150 and may connect to any appropriate housing-internal conductor 152, which may represent any appropriately dimensioned and shaped conductor for connecting to a further component, wherein in some cases the conductor 152 may even lack any external insulating liner due to the protected interior 151. Similarly, the bushing 100 may connect to a respective terminal portion or any other contact assembly provided in combination with an external cable or contact assembly 140. Consequently, the bushing conductor 120 may be connected with its connecting portion 121 to the terminal portion or contact assembly of the cable 140 so as to be in tight mechanical and thus electrical contact therewith. In particular, the end face 121F of the connecting portion 121 is in contact with a respective part of the cable 140 and may mechanically be fixed thereto by any appropriate fastening means, such as a screw 141, which may be threaded into a corresponding bore 124 formed in the bushing conductor 120. As previously discussed, the fastening member 141 and the threaded bore 124 may be configured so as to comply with specified standards in order to allow the connection of any terminal portion or contact assembly that complies with the corresponding standards. Consequently, when the external cable or a corresponding terminal portion or contact assembly thereof is mechanically connected to the connecting portion 121 the electrical connection is basically established by the end face 121F and a corresponding surface portion of the cable 140, possibly in combination with the fastening member 141, while any outer surface areas of the connection portion 121 do not contribute to the electrical and mechanical connection with the cable 140.

Similarly, a second connection portion 122 of the bushing conductor 120 may connect with its end face 122F to the housing-internal conductor 152, wherein a respective mechanical connection may be established on the basis of any appropriate fastening means, such as a threaded connection, and the like. For instance, in one illustrative embodiment, a screw 126 may be provided within the end portion 122 so as to allow a mechanical stable connection to the conductor 152. In one illustrative embodiment the fastening member 126 may be inserted and operated through a bore 125, which extends along a length direction L through the entire bushing conductor 120. It should be appreciated that in this case the inner bore 125 may include the portion 124, possibly including a threaded inner surface, as discussed above, and a corresponding portion so as to accommodate the fastening member 126, such as a screw, and the like. Moreover, if required, a respective tool for operating the fastening member 126 may be inserted from the first connecting portion 121 prior to connecting the cable 140, for instance via an appropriate contact assembly, to the first connecting portion 121.

Moreover, as illustrated the cross-sectional size of the bushing conductor 120 may vary along the length direction L, wherein, as discussed above, in some illustrative embodiments the overall cross-sectional area at the first connecting portion 121 may be less compared to the second connecting portion 122. For example, at a centre portion 123 of the bushing conductor 120 the cross-sectional shape of a transition area from the increased cross-sectional area of the second connecting portion 122 may change into the reduced cross-sectional area of the first connecting portion 121, thereby providing a tapering configuration. Based on this tapering configuration a tight mechanical contact may be established between the insulating body 110 including the shielding sheath 114 positioned at its inner surface and the bushing conductor 120. For example, at least at the second connecting portion 122 and a part of the centre portion 123 a form closure may be established between the bushing conductor 120 and the insulating body 110. In other cases the form closure may exclusively be established in parts of the centre portion 123.

On the other hand, in the area of the first connecting portion 121 the bushing conductor 120 is arranged such that it is elastically deformable with respect to the insulating body 110 at least in one radial direction, which is to be understood as a direction perpendicular to the length direction L. Although not shown in the drawings it is to be understood that in other embodiments instead of the first connecting portion 121 the second connecting portion 122 is arranged such that it is elastically deformable with respect to the insulating body 110. In other embodiments both the first and second connecting portions 121, 122 are elastically deformable with respect to the insulating body 110.

In the remaining description features and advantages of the elastic deformation capability of the first connecting portion 121 will be described without specific reference to the second connecting portion. However, any of these features and advantages also applies to embodiments, in which the second connecting portion or both the first and the second connecting portion are elastically deformable. Furthermore, providing a clearance according to the present invention is also helpful when dealing with plastic deformation of the bushing conductor 120. Such plastic deformation may happen under severe mechanical overload which might occur only once or a few times during the life-time of the bushing.

The ability for elastic deformation is meant to include a movement of a part of the bushing conductor 120 or deformation/bending with a substantial degree of reversibility of a part of the bushing conductor 120. Thus, the amount of displacement/re-location of the deformation versus the insulating body 110 is varying along its length. The displacement or deformation starts at zero in the area of the connection to the insulating body and increases towards its maximum value at the end. As a consequence, upon connecting the cable 140 by any appropriate terminal portion or contact assembly to the connecting portion 121 in order to establish at least electrical contact between the end face 121F and the contact assembly connecting to the cable 140 a radial force exerted on the first connecting portion 121 by the attached cable 140 may result in a corresponding radial deformation of the connecting portion 121 with respect to the first body end portion of the insulating body 110. The same holds true for the second connecting portion 122 when connecting the same with the housing-internal conductor.

As previously discussed, even the moderate weight of the cable 140 may result in significant radial forces acting on the connecting portion 121 which may, without providing the elastic deformation function as in conventional devices, in severe stresses between the bushing conductor 120 and the insulating body 110 when conventionally formed as an integral component based on epoxy resin and a copper bolt. According to the present invention, however, the connecting portion 121 may respond to a corresponding radial force by elastic deformation, thereby significantly reducing any mechanical stress transferred into the insulating body 110 thus reducing the risk of damage and device failure even over a prolonged specified lifetime of the bushing 100. In particular, the connecting portion 121 having the elastic deformation capability, and/or the connecting portion 122 when having the elastic deformation capability, may also appropriately respond to any type of vibrations or oscillations such that any mechanical stress associated with such vibrations may substantially not be coupled into the insulating body 110 or may at least be significantly damped, thereby also contributing to superior reliability of the insulating body 110 and thus of the entire bushing 100. It should be appreciated that one or both connecting portions 121, 122 may also favorably respond to a static load acting on the bushing 100 by taking on a more or less static deformation.

In the embodiment illustrated in Figure 3 the insulating body 110 may exhibit superior electric integrity due to the provision of the shielding sheath 114 at the inner surface thereof due to the shielding effect, while also providing for superior contact characteristics with the bushing conductor 120 along a respective length, for instance in the centre portion 123, in which a tight mechanical contact due to form closure between the insulating body 110, i.e. the shielding sheath 114, and the conductor 120 is established. Thus, in addition to superior shielding effect also high mechanical strength for connecting the bushing 100 to the housing 150 may be achieved, while also a tight mechanical and electrical connection to the housing-internal conductor 152 is established. On the other hand, the capability of elastic deformation of the connecting portion 121 with respect to the insulating body 110 may still provide for a significant degree of mechanical decoupling in this area of the bushing 100, thereby significantly reducing any mechanical stress in the relevant part of the insulating body 110 upon occurrence of bending or radial forces, mechanically induced vibrations, which may be caused by components within or in the vicinity of the housing 150 or by vibrations transmitted via the cable 140.

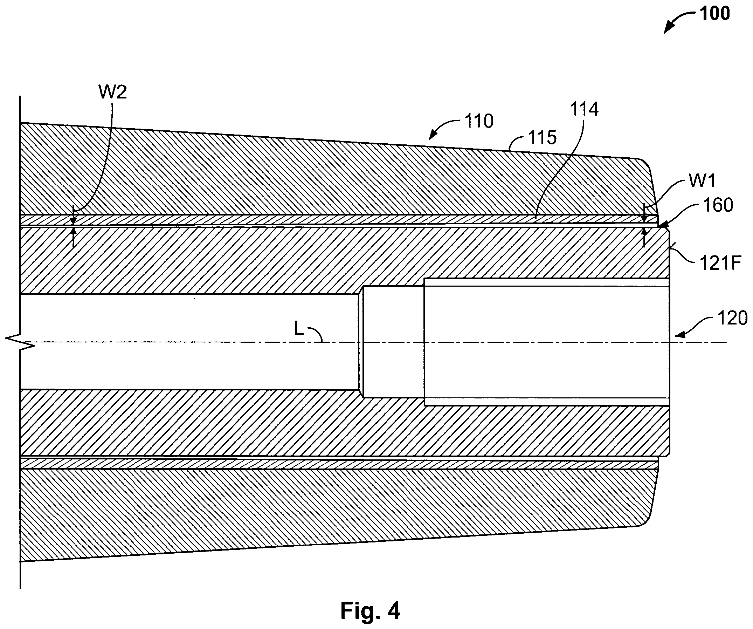

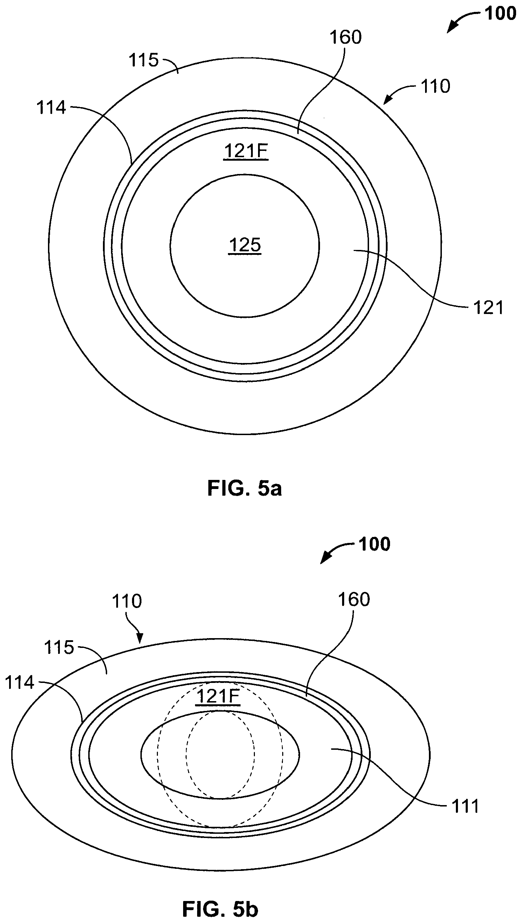

Figure 4 schematically illustrates the present invention, showing a cross-sectional view of an end portion of the bushing 100 according to illustrative embodiments. As shown, the elastic displacement or deformation capability of the first connecting portion 121 of the bushing conductor 120 in one embodiment is established on the basis of a clearance 160 formed between the relevant portion of the insulating body 110, which in the embodiment shown includes the shielding sheath 114, and the connecting portion 121 of the conductor 120. In the embodiment shown the clearance 160 may represent a substantially material-free space so as to allow a displacement or deformation of the portion 121 in at least one radial direction, i.e. in at least one direction perpendicular to the length direction L. In other illustrative embodiments the clearance 160 may be provided so as to allow elastic deformation or displacement in any radial direction, as will be discussed later on in more detail with reference to Figure 5a.

Moreover, in the embodiment illustrated in Figure 4 the clearance 160 has a tapered shape in the cross sectional view, which means that a width of the clearance 160 gradually increases towards the end face 121F. For example, at any appropriate position in the centre portion of the bushing 100 the insulating body 110 and the conductor 120 may be in close contact with each other and may then begin to separate, thereby establishing a small width W2, which increasingly becomes greater when approaching the end face 121F, thereby establishing a final width W1. For example, the gradual increase of the clearance 160 towards the end face 121F may be obtained by correspondingly reducing a cross-sectional size of the insulating body 110 and/or the conductor 120 so as to obtain the desired final width W1. In some illustrative embodiments the width W1 may range from 0.1 mm to 1.0 mm, depending on the overall range of deformation required for accommodating the respective radial forces. It should be appreciated that the application specific width of the clearance 160 may readily be determined by experiment and/or simulations, wherein the overall cross-sectional size of the conductor 120, the geometry of the cross-section, the material characteristics and the type and amplitude of corresponding vibrations and/or radial forces may be entered into the simulations in order to obtain the required width W1. It should be appreciated that a length dimension of the clearance 160, i.e. a length of the space with non-zero width to the end of the insulating body 110, may range from 15 mm to 300 mm in illustrative embodiments. It should further be appreciated that the width of the clearance 160 may be defined by a representative value or width so as to define a characteristic measure of the clearance. Such a representative width may be defined as the width W2, a width averaged along the length of clearance 160, in which a non-zero distance between the components 110 and 120 is established, and the like.

In still other illustrative examples not part of the invention, the width of the clearance 160 may substantially be constant along the length direction L starting from a specific position, as discussed above, wherein a substantially constant value may be established by providing a step in the insulating body 110 and/or in the conductor 120 at the specific position where the width basically "jumps" from zero to the desired width. A corresponding starting point for the clearance 160 by providing a respective step in the insulating body 110 and/or the bushing conductor 120 may also be used in combination with a tapering cross-sectional form of the clearance 160 such that the tapering abruptly begins at the specific position with a non-zero value and then gradually increases towards the end face 121F, thereby also obtaining a variation in width, however, starting at a well defined position with well defined non-zero value.

In some illustrative embodiments, a portion of the clearance 160 may be filled with an elastic fill material, such as silicone rubber, (silicone) foam, conformable materials like silicone gel or oil, and the like, thereby still providing for elastic deformation capability of the connecting portion 121, while on the other hand providing for a certain degree of integrity of the clearance 160 with respect to incorporation of undesired substances, and the like. For example, a corresponding fill material may be provided after having assembled the bushing 100, thereby forming a ring-like fill material in the vicinity of the end face 121F, which may suffice for reducing the probability of incorporating undesired substances. In other cases, a respective fill material may be injected along a significant length of the clearance or into the entire clearance by any appropriate deposition techniques.

Figure 5a schematically illustrates a cross-sectional view of the bushing 100 perpendicular to the length direction, i.e. the direction perpendicular to the drawing plane of Figure 5a, at a position, in which the clearing 160 is present between the connecting portion 121 and the insulating body 110. In this illustrative embodiment, the cross-sectional area of the end face 121F has an annular shape surrounding the corresponding bore 125, and the clearing 160 concentrically surrounds the connecting portion 121 and thus separates the shielding sheath 114 from the material of the portion 121. Since the geometry of the entire configuration is radially symmetric with respect to the length direction, the elastic deformation capability of the portion 121 with respect to the insulating body 110 is substantially the same in any radial direction. Consequently, the connecting portion 121 may respond to mechanical "excitation" along any radial direction substantially without transferring mechanical stress into the respective portion of the insulating body 110. Consequently, even for a complex mechanical excitation regime of the connecting portion 121, when connected to the corresponding cable 140 (cf Figure 3), the inventive elastic deformation capability may result in a significant or complete damping of mechanical stress transferred into the insulating body 110.

In other cases, one or more preferred directions for responding to mechanical excitation may be selected as is described with reference to Figure 5b.

Figure 5b schematically illustrates a cross-sectional view similar to Figure 5a, wherein, however, the geometric configuration is adapted so as to obtain a non-radal-symmetric configuration. Hence, an elastic deformation in one or more directions may be achieved more easily compared to other radial directions. For example, in the embodiment shown the portion 121 may be displaced more easily in the up/down direction of Figure 5b, while it may exhibit a significantly stiffer behaviour in the right-left direction of Figure 5b. It should be appreciated that a corresponding geometric variation of the cross-sectional configuration may be established at any appropriate position along the length, in which the clearance 160 is established. On the other hand, as indicated by the dashed lines, at the very end of the portion 121 the geometric configuration may still be provided so as to comply with specific standards for connecting to the cable 140 (cf. Figure 3), which may, for instance, require a substantially circular geometry of the end face 121F. In this manner the overall cross-sectional area of the bushing conductor may be increased at any desired position along the length direction, thereby also providing the possibility of adjusting the "directionality" of the elastic deformation capability, while still maintaining the possibility of connecting to a standardised terminal portion or contact assemblies of external cables.

The inventive bushing 100 may be formed in accordance with well-established techniques, for instance by forming the insulating body 110, possibly in combination with the shielding sheath 114, by any appropriate moulding techniques, such as injection moulding, wherein an appropriate insulating material, such as epoxy resin, may be combined with the shielding material, such as aluminium, thereby forming the insulating body as an integral part. On the other hand, the bushing conductor 120 may be formed as a separate component, for instance based on copper material, by using any appropriate manufacturing technique. Thereafter, the two components may be assembled, for instance by inserting the bushing conductor 120 into the insulating body. When referring to Figure 3, the conductor 120 may be inserted from the left-hand side of Figure 3 into the insulating body 110. In this manner, a tight mechanical connection may be established by form closure between the inner surface of the insulating body, for instance the shielding sheath 114, and the outer surface portion of the conductor 120 at areas, in which the elastic deformation capability is not present. In addition to or instead of a press fit or form fit between the sheath 114 and the conductor 120 form fit elements, such as radially oriented bolts, or material fit by soldering or welding may be used. In other cases the sheath 114 and the conductor 120 may initially be provided as an integral component and the clearance 160 may be formed by machining. During or after the assembly of these two components, as discussed above, optionally an elastic fill material may be incorporated into the clearance 160, if considered appropriate. Consequently, in illustrative embodiments a simple two-part design may be used for the bushing 100, thereby not unduly contributing to increased overall manufacturing cost, while nevertheless imparting significant decoupling capabilities to the connecting portion of the bushing conductor.

### List of reference signs

- 100: bushing
- 110: elongated insulating body
- 111: first body end portion
- 112: second body end portion
- 113: body centre portion
- 114: shielding sheath
- 115: insulating material
- 120: bushing conductor
- 121: first connecting portion
- 121F: first end face
- 122: second connecting portion
- 122F: second end face
- 123: centre portion
- 124: bore of bushing conductor
- 125: bore extending through entire bushing conductor
- 126: fastening member
- 130: mounting flange
- 140: external cable or contact assembly
- 141: fastening member, screw
- 150: housing
- 151: housing interior
- 152: housing-internal conductor
- 160: clearance

## Claims

1. A bushing (100), comprising
an elongated insulating body (110) including a first body end portion (111), a second body end portion (112) and a body centre portion (113) connecting said first (111) and second (112) body end portions,
an elongated bushing conductor (120) coaxially extending within and mechanically coupled to said insulating body (110), said bushing conductor (120) comprising
a first connecting portion (121) having a first end face (121F) located at said first body end portion (111),
a second connecting portion (122) having a second end face (122F) located at said second body end portion (112) and
a centre portion (123) electrically and mechanically connecting said first (121) and second (122) connecting portions,
wherein said first connecting portion (121) is elastically deformable with respect to said first body end portion (111) along at least one radial direction and/or said second connecting portion (122) is elastically deformable with respect to said second body end portion (112) along the at least one radial direction, and
wherein a clearance (160) is provided between said first connecting portion (121) and said first body end portion (111) and/or between said second connecting portion (122) and said second body end portion (112)
**characterized in that**
the clearance is tapered so as to gradually increase in width towards the first end face (121F) and that said clearance includes one or more areas without any material provided therein.

2. The bushing of claim 1, wherein said clearance (160) is filled partially with an elastic fill material and/or a compressible material.

3. The bushing of any one of claims 1 and 2, wherein said clearance (160) has a width in the range of up to 5.0 mm and/or up to 5 % of the length of the first and/or second connecting portions (121, 122) of said bushing conductor (120).

4. The bushing of any one of claims 1 to 3, wherein a form closure, a material fit, a force fit, or at least one mechanical fastening element is provided between a part of said elongated bushing conductor (120) and a part of said elongated insulating body (110).

5. The bushing of any of the preceding claims, wherein at least one of said first and second connecting portions is elastically deformable along any radial direction.

6. The bushing of any of claims 1 to 4, wherein said at least one radial direction is determined by a non-radial-symmetric geometric configuration of a cross-section of at least one of said first and second connecting portions and/or a part of said centre portion of said bushing conductor.

7. The bushing of any of the preceding claims, wherein a length of at least one of said first and second connecting portions that is elastically deformable is 15 mm to 300 mm.

8. The bushing of any of the preceding claims, wherein said insulating body comprises a shielding sheath (114) provided as an inner surface of said insulating body.

9. The bushing of claim 8, wherein said shielding sheath (114) comprises a metal that differs from a metal of said bushing conductor.

10. The bushing of any of the preceding claims, further comprising a mounting flange (130) provided at the centre portion (113) for fixing said bushing to a housing (150).

11. The bushing of claim 10, wherein said mounting flange (130) is provided at an axial position, at which said bushing conductor (120) and said insulating body (110) are in contact with each other.

12. The bushing of any of the preceding claims, wherein said bushing conductor has an inner bore (125) extending through an entire length of said bushing conductor.

13. The bushing of any of the preceding claims, wherein a size of said first end face is less than a size of said second end face.

14. The bushing of any of the preceding claims configured to be used on an electrically driven vehicle for conveying electrical power of 100 kW and higher.

## Patentansprüche

1. Durchführungshülse (100), die umfasst:
einen länglichen Isolierkörper (110), der einen ersten Körper-Endabschnitt (111), einen zweiten Körper-Endabschnitt (112) sowie einen Körper-Mittelabschnitt (113) einschließt, der den ersten Körper-Endabschnitt (111) und den zweiten Körper-Endabschnitt (112) verbindet,
einen länglichen Durchführungsleiter (120), der sich koaxial innerhalb des Isolierkörpers (110) erstreckt und mechanisch mit diesem gekoppelt ist, wobei der Durchführungsleiter (120) umfasst:
einen ersten Verbindungsabschnitt (121) mit einer ersten Endfläche (121F), angeordnet an dem ersten Körper-Endabschnitt (111),
einen zweiten Verbindungsabschnitt (122) mit einer zweiten Endfläche (122F), angeordnet an dem zweiten Körper-Endabschnitt (112),
einen Mittelabschnitt (123), der den ersten Verbindungsabschnitt (121) und den zweiten Verbindungsabschnitt (122) elektrisch und mechanisch verbindet,
wobei der erste Verbindungsabschnitt (121) in Bezug auf den ersten Körper-Endabschnitt (111) in wenigstens einer radialen Richtung elastisch verformt werden kann und/oder der zweite Verbindungsabschnitt (122) in Bezug auf den zweiten Körper-Endabschnitt (112) in der wenigstens einen radialen Richtung elastisch verformt werden kann, und
ein Zwischenraum (160) zwischen dem ersten Verbindungsabschnitt (121) und dem ersten Körper-Endabschnitt (111) und/oder zwischen dem zweiten Verbindungsabschnitt (122) und dem zweiten Körper-Endabschnitt (112) vorhanden ist,
**dadurch gekennzeichnet, dass**
der Zwischenraum sich so verjüngt, dass seine Breite in Richtung der ersten Endfläche (121F) allmählich zunimmt, und der Zwischenraum einen oder mehrere Bereich/e ohne jegliches darin vorhandenes Material umfasst.

2. Durchführungshülse nach Anspruch 1, wobei der Zwischenraum (160) teilweise mit einem elastischen Füllmaterial und/oder einem komprimierbaren Material gefüllt ist.

3. Durchführungshülse nach einem der Ansprüche 1 und 2, wobei der Zwischenraum (160) eine Breite im Bereich von bis zu 5,0 mm und/oder bis zu 5 % der Länge des ersten und/oder des zweiten Verbindungsabschnitts (121, 122) des Durchführungsleiters (120) hat.

4. Durchführungshülse nach einem der Ansprüche 1 bis 3, wobei zwischen einem Teil des länglichen Durchführungsleiters (120) und einem Teil des länglichen Isolierkörpers (110) ein Formschluss, ein Materialschluss, ein Kraftschluss oder wenigstens ein mechanisches Befestigungselement vorhanden ist.

5. Durchführungshülse nach einem der vorangehenden Ansprüche, wobei der erste oder/und der zweite Verbindungsabschnitt in einer beliebigen radialen Richtung elastisch verformt werden kann/können.

6. Durchführungshülse nach einem der Ansprüche 1 bis 4, wobei die wenigstens eine radiale Richtung durch eine nicht-radialsymmetrische geometrische Konfiguration eines Querschnitts des ersten oder/und des zweiten Verbindungsabschnitts und/oder eines Teils des Mittelabschnitts des Durchführungsleiters bestimmt wird.

7. Durchführungshülse nach einem der vorangehenden Ansprüche, wobei eine Länge des ersten oder/und des zweiten Verbindungsabschnitts, der/die elastisch verformt werden kann/können, 15 mm bis 300 mm beträgt.

8. Durchführungshülse nach einem der vorangehenden Ansprüche, wobei der Isolierkörper eine Abschirmungs-Ummantelung (114) umfasst, die als eine Innenfläche des Isolierkörpers vorhanden ist.

9. Durchführungshülse nach Anspruch 8, wobei die Abschirmungs-Ummantelung (114) ein Metall umfasst, das sich von einem Metall des Durchführungsleiters unterscheidet.

10. Durchführungshülse nach einem der vorangehenden Ansprüche, die des Weiteren einen Montageflansch (130) umfasst, der an dem Mittelabschnitt (113) zum Befestigen der Durchführungshülse an einem Gehäuse (150) vorhanden ist.

11. Durchführungshülse nach Anspruch 10, wobei der Montageflansch (130) an einer axialen Position vorhanden ist, an der der Durchführungsleiter (120) und der Isolierkörper (110) miteinander in Kontakt sind.

12. Durchführungshülse nach einem der vorangehenden Ansprüche, wobei der Durchführungsleiter eine innere Bohrung (125) aufweist, die sich über eine gesamte Länge des Durchführungsleiters erstreckt.

13. Durchführungshülse nach einem der vorangehenden Ansprüche, wobei eine Größe der ersten Endfläche geringer ist als eine Größe der zweiten Endfläche.

14. Durchführungshülse nach einem der vorangehenden Ansprüche, ausgeführt für Einsatz bei einem elektrisch angetriebenen Fahrzeug zum Übertragen elektrischer Leistung von 100 kW und mehr.

## Revendications

1. Traversée (100), comprenant
un corps isolant allongé (110) incluant une première partie d'extrémité de corps (111), une deuxième partie d'extrémité de corps (112) et une partie centrale de corps (113) connectant lesdites première (111) et deuxième (112) parties d'extrémité de corps,
un conducteur de traversée allongé (120) s'étendant coaxialement au sein dudit et mécaniquement couplé audit corps isolant (110), ledit conducteur de traversée (120) comprenant
une première partie de connexion (121) présentant un premier côté d'extrémité (121F) situé sur ladite première partie d'extrémité de corps (111),
une deuxième partie de connexion (122) présentant un deuxième côté d'extrémité (122F) situé sur ladite deuxième partie d'extrémité de corps (112) et
une partie centrale (123) connectant électriquement et mécaniquement lesdites première (121) et deuxième (122) parties de connexion,
dans laquelle ladite première partie de connexion (121) est élastiquement déformable par rapport à ladite première partie d'extrémité de corps (111) le long d'au moins une direction radiale et/ou ladite deuxième partie de connexion (122) est élastiquement déformable par rapport à ladite deuxième partie d'extrémité de corps (112) le long de l'au moins une direction radiale, et
dans laquelle une garde (160) est disposée entre ladite première partie de connexion (121) et ladite première partie d'extrémité de corps (111) et/ou entre ladite deuxième partie de connexion (122) et ladite deuxième partie d'extrémité de corps (112)
**caractérisée en ce que**
la garde est effilée de sorte à augmenter progressivement en largeur vers le premier côté d'extrémité (121F) et que ladite garde inclue une ou plusieurs zones totalement dépourvues de matériau en leur sein.

2. La traversée de la revendication 1, dans laquelle ladite garde (160) est partiellement remplie d'un matériau de remplissage élastique et/ou d'un matériau compressible.

3. La traversée de l'une quelconque des revendications 1 et 2, dans laquelle ladite garde (160) présente une largeur dans la plage allant jusqu'à 5 mm et/ou jusqu'à 5 % de la longueur de la première et/ou deuxième partie (s) de connexion (121, 122) dudit conducteur de traversée (120).

4. La traversée de l'une quelconque des revendications 1 à 3, dans laquelle une fermeture de forme, une adaptation par matériau, une adaptation par force ou au moins un élément de fixation mécanique est disposé entre une partie dudit conducteur de traversée allongé (120) et une partie dudit corps isolant allongé (110).

5. La traversée de l'une quelconque des revendications précédentes, dans laquelle au moins une desdites première et deuxième parties de connexion est élastiquement déformable le long de toute direction radiale.

6. La traversée de l'une quelconque des revendications 1 à 4, dans laquelle ladite au moins une direction radiale est déterminée par une configuration géométrique symétrique non radiale d'une section transversale d'au moins une desdites première et deuxième parties de connexion et/ou une partie de ladite partie centrale dudit conducteur de traversée.

7. La traversée de l'une quelconque des revendications précédentes, dans laquelle une longueur d'au moins une desdites première et deuxième parties de connexion qui est élastiquement déformable est de 15 mm à 300 mm.

8. La traversée de l'une quelconque des revendications précédentes, dans laquelle ledit corps isolant comprend une gaine de blindage (114) disposée en tant que surface intérieure dudit corps isolant.

9. La traversée de la revendication 8, dans laquelle ladite gaine de blindage (114) comprend un métal différent d'un métal dudit conducteur de traversée.

10. La traversée de l'une quelconque des revendications précédentes, comprenant en outre une bride de montage (130) disposée sur la partie centrale (113) pour fixer ladite traversée à un boîtier (150).

11. La traversée de la revendication 10, dans laquelle ladite bride de montage (130) est disposée sur une position axiale, à laquelle ledit conducteur de traversée (120) et ledit corps isolant (110) sont en contact l'un avec l'autre.

12. La traversée de l'une quelconque des revendications précédentes, dans laquelle ledit conducteur de traversée présente un alésage intérieur (125) s'étendant à travers une longueur entière dudit conducteur de traversée.

13. La traversée de l'une quelconque des revendications précédentes, dans laquelle une taille dudit premier côté d'extrémité est inférieure à une taille dudit deuxième côté d'extrémité.

14. La traversée de l'une quelconque des revendications précédentes configurée pour être utilisée sur un véhicule entraîné électriquement pour acheminer une puissance électrique de 100 kW ou plus.
